# EUROPEAN PATENT SPECIFICATION

(11) **EP 2 050 372 B1**
(45) Date of publication and mention of the grant of the patent: **21.09.2011**
(21) Application number: 07425659.5
(22) Date of filing: 19.10.2007
(51) Int. Cl.: A47J 31/54, A47J 31/46

(54) **Coffee machine with control of the dispensing temperature by means of a heat exchanger and controlled mixing**
Kaffeemaschine mit Steuerung der Ausgabetemperatur durch einen Wärmetauscher und gesteuerte Mischung
Machine à café avec contrôle de la température de distribution au moyen d'un échangeur thermique et mélange contrôlé

(43) Date of publication of application: 22.04.2009
(73) Proprietor: Gruppo Cimbali S.p.A., 20082 Binasco (MI) (IT)
(72) Inventor: Coccia, Andrea, 20082 Binasco (MI) (IT)
(74) Representative: Bonvicini, Davide

(56) References cited:
- EP-A- 0 307 955
- EP-A- 1 354 543
- EP-B- 1 523 263
- US-A- 4 650 158

## Description

The present invention relates to a coffee machine, particularly for espresso coffee, comprising at least one dispensing unit with filter holder, a steam generator, a heat exchanger in a thermal exchange relationship with said steam generator, said heat exchanger being connected, at the inlet, to a source of pressurised cold water via a pipe comprising at least one flow rate calibrating device and, at the outlet, to a first length of pipe directed towards the filter of said dispensing unit via a dispensing valve and a second length of pipe downstream of said valve.

Since the development of the first model of coffee machine at the start of the twentieth century, the operation of the majority of apparatuses for the rapid preparation of coffee has been based on the use of a steam generator as a heat accumulator capable of releasing, when required, the thermal energy accumulated in the form of superheated water or steam, necessary for the immediate preparation of a multiplicity of hot beverages such as black coffee, white coffee, chocolate, tea, punch and many others.

Although the use of the steam generator proved right from the start to be a fundamental element for having high energy peaks available while using low heating power, it has however always involved the drawback that the hot water, made immediately available owing to the accumulation of energy of the pressurised saturated steam receptacle, is at a temperature significantly higher than 100°C whereas, as is known, in order to prepare good coffee, water at below 100°C should be used.

One of the technical problems which the manufacturers must constantly confront is in fact that of succeeding in preparing good coffee at the correct temperature while utilising all the potential of a steam generator which necessarily functions at higher temperatures, while at the same time providing stability and constancy of the thermal state of the dispensing unit independently of the working frequency, that is to say, the frequency with which the dispensing of measured amounts of coffee is demanded.

In order to solve this problem, according to the prior art, solutions have been proposed based to some extent on the mixing of the superheated water issuing from the steam generator, with cooler water issuing from a source outside the machine.

A solution based on the principle mentioned above is described, for example, in DE 553950. The mixing process proposed therein has the merit of being direct and of being based on starting data provided with a sufficient constancy of values. In fact, the water which issues from a saturated steam generator, in a coffee machine which operates around the nominal pressure of 1 bar, in the presence of pressure variations of ±20% exhibits a temperature variation of less than ±3%. The variations of the cold component linked to a source which, as a rule, is a mains water system with limited thermal drift, in turn carry a lesser weight also owing to the fact that the cold water is the minority component compared with the hot component.

According to the technical solution illustrated in DE 553950 cited above, however, dispensing the coffee at the low pressure of the steam generator is no longer acceptable in relation to modern coffee machines which, as is known, work at a pressure of around 9 bar.

According to another known solution, described in GB 879 331, the thermal stability of the water to be used in the preparation of coffee is pursued by means of the use of a heat exchanger immersed in the boiler of the steam generator, being based on the phenomenon according to which the cold water admitted into the exchanger to replace that used during dispensing mixes dynamically with the hot water contained therein. In this way, depending on the dispensing frequency, cooling of the water within the exchanger takes place which tends to compensate for the tendency to superheating of the dispensing unit.

Also in modern coffee machines, where the water is forced onto the ground coffee at a pressure of 9 bar, injected by a pump, the device universally adopted for utilising the potential and the temperature stability obtainable with a steam boiler is the heat exchanger.

This known technology however, while it has provided a significant improvement in the definition of the thermal stability of the dispensing units, still has some drawbacks inasmuch as the cooling of the exchanger depends on the working frequency, on the volumes dispensed, and on its internal volume.

The differences in the types of coffee-based beverages which exist, because of the different volumes dispensed and the different roasting requirements, between the espresso coffee served in Mediterranean countries and the white coffee served in Northern Europe, are known.

Therefore, an exchanger with good dimensions for a certain type of coffee may also give a good performance but, when the type of coffee changes, the performance drops. Confirmation of this situation is found by considering the numerous attempts at improvement made on the subject, as shown, for example, by the document EP 0 658 088 B1.

Using the known mixing technology, as illustrated for example in the earlier document DE 553950, in a modern injection machine, operating with a heat exchanger provided with dimensions, for example, according to the criteria described in GB 879 331, acceptable results are not obtained.

In fact, the dispensing of 2 espresso coffees having a volume of 35 cm³ in the cup, in an injection machine, entails an effective consumption of 100 cm³ of water; an exchanger provided with dimensions according to the criteria indicated in GB 879 331 would, therefore, have to have a capacity of at least 200 cm³. If the mixing technology described by the document DE 553 950 had to be applied to a dispenser fed by a pump via an exchanger of such dimensions, it is found that a first pair of coffees could be dispensed with water at an optimum temperature of 90°C, with a mixing ratio set for mixing 28 cm³ of cold water at 15°C, issuing from the mains supply system, and 72 cm³ of water at 119.6°C issuing from the heat exchanger immersed in the boiler in which a relative saturated steam pressure of 1 bar prevails.

At the end of this first dispensing the result is that, inside the exchanger, 72 cm³ of water at 119.6°C have been replaced with 72 cm³ of water at 15°C coming from outside the exchanger.

The result of this mixing is that the temperature in the exchanger has dropped to around 82°C. The immediate dispensing of a second pair of coffees would lead to mixing a further 28 cm³ of cold water issuing from the mains supply system with another 72 cubic centimetres of water from the exchanger which is now at 82°C, with the result that the second dispensing would take place with water at 63°C, with an unacceptable qualitative result.

Even if the arrangement illustrated above does not take account of the fact that, during dispensing, the exchanger receives a certain amount of heat from the steam generator, it nevertheless makes it possible to understand that the performance obtained would be far from acceptable.

Another type of heat exchanger for coffee machines is shown in FR 1,289,775. This also, however, has the drawback that, during operation to dispense the beverage, the incoming cold water will mix with the hot water within a single, wide chamber.

Another coffee machine is described in EP 0 307 955 A.

It is therefore found that in coffee machines using heat exchangers of the prior art, the mixing process for obtaining the flow of water for dispensing the beverage takes place in combination with another mixing process owing to the remixing of the flows within the heat exchanger with significant uncertainty regarding the constancy of the temperature obtained.

The aim of the present invention is therefore that of providing temperature control for a coffee machine by means of the controlled mixing of cold water with superheated water issuing from an exchanger connected to a steam generator and planned in such a way as to limit mixing inside it and to provide a constant temperature at the outlet opening up to a predetermined threshold flow rate.

This aim is achieved, according to the invention, by means of a coffee machine according to the following claim 1.

The invention will now be described in greater detail with reference to the appended drawings, provided solely by way of non-limiting example, and wherein:
- Figure 1 shows diagrammatically the circuit connections of a machine for dispensing coffee with a heat exchanger and control of the temperature of the dispensing flow by means of mixing with cold water;
- Figure 2 shows diagrammatically, in perspective, a first embodiment of the heat exchanger according to the invention;
- Figure 3 shows diagrammatically, in perspective, a second embodiment of the heat exchanger, according to the invention;
- Figure 4 shows an internal structural detail of the heat exchanger of Figure 3.

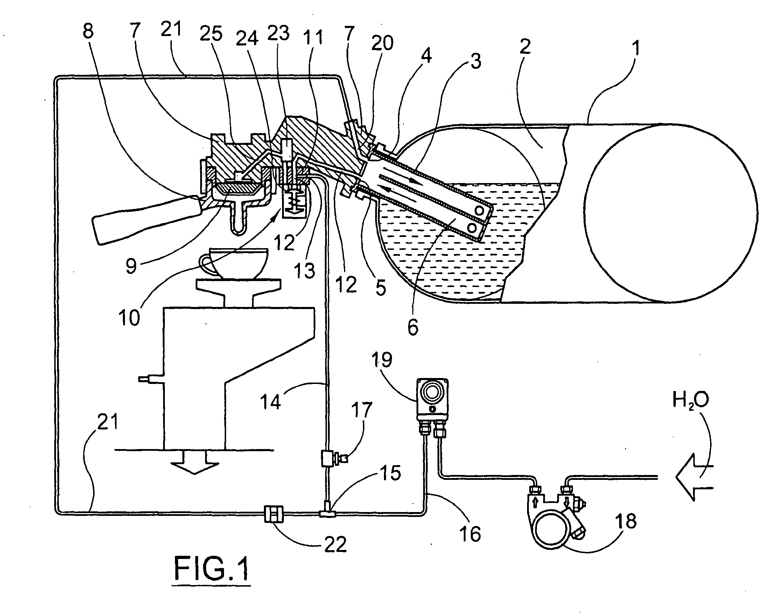

With reference to Figure 1, it will be observed that the machine comprises a steam generator indicated as a whole by 1, connected in a conventional manner, which is not shown, to a source of water for its water supply.

Positioned in the cavity 2 of the boiler of the steam generator 1 is a heat exchanger indicated as a whole by 3 and the structure of which will be described in greater detail hereinafter.

The exchanger 3 is provided with an inlet 4 and with an outlet 5, between which the internal path 6 extends.

The exchanger 3 is directly connected to the dispensing unit, indicated as a whole by 7, which in a conventional manner comprises the filter holder 8 with filter 9, and also a dispensing valve indicated as a whole by 10. This latter is fixed to a connecting block 11 which is in turn connected to the dispensing unit 7. The outlet 5 of the heat exchanger 3 is connected to a first length of pipe 12 directed towards the filter 9 and which, via the connecting block 11, reaches the dispensing valve 10.

Connected to the same block 11, via the connector 13 which opens inside the pipe 12, is a pipe 14 coming from a cold water source represented by the connector 15 to which a pipe 16 coming from a water source outside the coffee machine is connected. The pipe 14 comprises a flow rate control device 17, of the adjustable type. The pipe 16 comprises a pump 18 for feeding the water at the desired pressure and also a metering device 19.

The inlet 4 of the heat exchanger 3 is connected to a pipe 20 which passes through the dispensing unit 7 and which is in turn connected to a pipe 21 coming from a cold water source, which is also represented by the connector 15, via a fixed flow rate calibrator 22.

Provided downstream of the dispensing valve is an infusion chamber 23 which, on one side, via the pipe 24, is connected to the dispensing valve 10, and on the other side is connected to a second length 25 of the pipe directed towards the filter 9 of the filter holder 8. Into the infusion chamber 23, when the dispensing valve 10 is actuated in order to dispense a predetermined measured amount of coffee, comes the flow of hot water at a predetermined high temperature, issuing from the heat exchanger 3, and the flow of cold water for mixing issuing from the pipe 14.

Through the mixing, the flow sent to the filter 9 for dispensing has a temperature regulated precisely in order to obtain a specific type of beverage under optimum conditions owing to the control of the temperature of the hot water issuing from the exchanger 3 and the metering of the cold water for mixing issuing from the pipe 14.

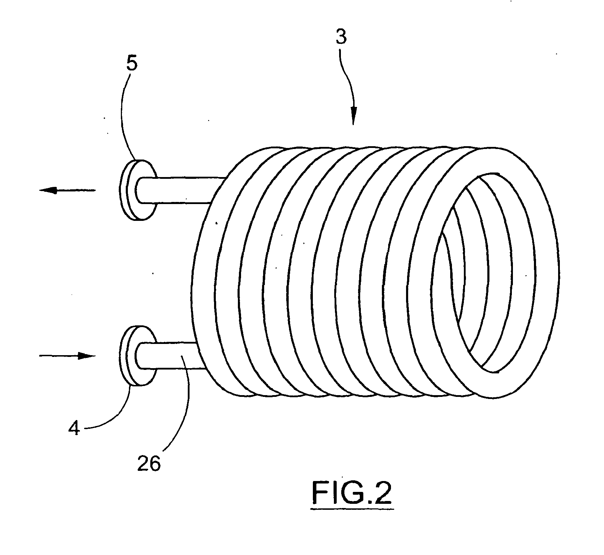

With reference to Figure 2, it will be observed that the heat exchanger 3, in a first embodiment thereof, comprises a tubular element 26 wound in a helix. The inner chamber of the tubular element 26 is characterized by a length very much greater than the transverse dimensions of its cross-section, with the formation of a consequent high ratio between the exchange surface area and the internal volume. The cold water entering from the inlet 4 pushes the hot water inside the tubular element 26 towards the outlet 5 in a manner which may be defined as "serial", since the geometry of the internal volume prevents significant remixing occurring between the incoming cold water and the hot water already present inside.

According to a preferred embodiment thereof, the tubular element 26 has a cross-section having a maximum diameter of between 6 and 10 mm, preferably 8 mm.

The length of the tubular element 26 is between 1800 and 2000 mm, preferably 1900 mm.

The cylindrical body resulting from the helical winding with turns alongside one another has an average diameter of around 40 mm and a height of around 140 mm.

The material used is preferably copper.

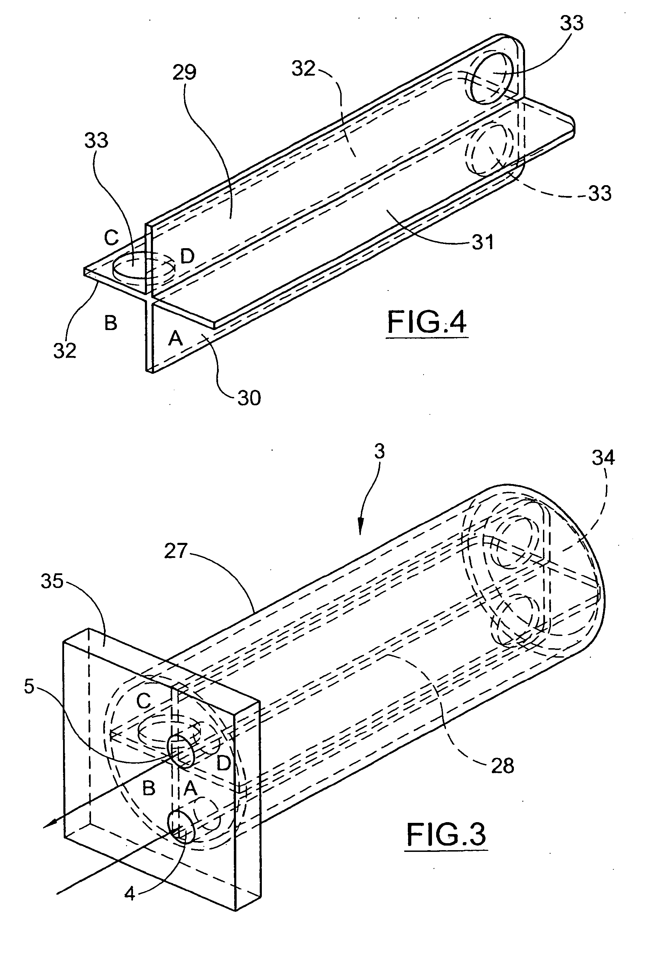

With reference to Figures 3 and 4, it will be observed that a second embodiment of the heat exchanger 3 comprises a box-like element 27, tubular in shape with a wide inner chamber 28.

Placed in the chamber 28 are sub-dividing partitions indicated by 29, 30, 31 and 32, which are coupled without play to the inner surface of the cylindrical wall of the chamber 28. These, with suitable passage openings 33 provided in proximity to the longitudinal ends, provide a path in the form of a labyrinth constituted in sequence by sectors A, B, C, D, as may be clearly seen also in Figure 3.

The heat exchanger, in its embodiment in Figure 3, further comprises a closed bottom 34 and a flange 35 where the inlet hole 4 for the cold water and the outlet hole 5 for the hot water are provided.

According to a preferred embodiment thereof, the box-like element 27 has an outside diameter of around 42 mm and an axial length of around 200 mm. The material is preferably copper.

Such an exchanger is characterized by a threshold flow rate value below which the water emerges from the outlet 5 always at the temperature determined by the fluid in which the exchanger is immersed in the boiler 2 of the steam generator 1. By determining the dimensions of the exchanger 3, in the embodiments illustrated in Figures 2 and 3, in such a way as to obtain a threshold flow rate equal to or greater than that necessary for dispensing the type of coffee which requires the highest flow rate, it is easily possible to obtain in a stable manner the temperatures necessary for the various types of dispensing with a machine which operates with a mixing system according to the arrangement illustrated in Figure 1.

The arrangement in fact represents a conventional espresso coffee machine of the manual loading type, although it may also be a machine equipped with a fully automatic dispenser or with a distributor for instant or concentrated coffee.

In operation, the cold water issuing from the pump 18 via the metering device 19 reaches the branching point 15 and divides into two flows. Through the fixed flow rate calibrator 22 and the pipe 20, the cold water is conveyed towards the dispenser 7. This latter is connected to the steam generator 1 by a coupling which allows it to receive therefrom the heat necessary for its operation in connection with the heat exchanger 3.

When dispensing takes place by actuating the valve 10, the flow of hot water emerging from the pipe 12 merges in the block 11 with the flow of cold water coming from the line 14 and, on the path towards the filter 9 via the infusion chamber 23, the two flows remix with one another to arrive on the coffee powder at the temperature predetermined by the ratio of the flow rates established by means of the setting of the regulator 17. To change the dispensing temperature on the coffee it is sufficient to set the ratio of the flow rate of the regulator 17 differently with respect to the calibrated passage 22. The machines with several exchangers of the type described here coupled to a steam generator and with several dispensing units also of a different kind may therefore easily be adapted to feed each dispenser with a flow of water at optimum temperature for the specific type of beverage dispensed thereby.

The dimensions and the materials may vary according to requirements, without thereby departing from the scope of protection of the invention as claimed hereinafter.

## Claims

1. A coffee machine, particularly for espresso coffee, comprising at least one dispensing unit (7) with filter holder (8), a steam generator (1), a heat exchanger (3) in a thermal exchange relationship with said steam generator (1), said heat exchanger (3) being connected, at the inlet, to a source of pressurised cold water via a pipe (21) comprising at least one flow rate calibrating device (22) and, at the outlet, to a first length of pipe (12) directed towards the filter (9) of said dispensing unit (7) via a dispensing valve (10) and a second length (25) of pipe downstream of said valve (10), said first length of pipe (12) emerging from the heat exchanger (3), upstream of said dispensing valve (10) including a connecting channel (13) into which flows a pipe (14), coming from a source (15) of pressurised cold water, including at least one device (17) for controlling the flow rate of the flow of cold water which passes through it, said flow rate calibrator (22) inserted into the pipe (21) connecting said source (15) of pressurised cold water with the inlet (4) of the heat exchanger (3), being of the fixed type and
said device (17) for controlling the flow rate, inserted in the pipe (14) coming from said source (15) of pressurised cold water and directed towards the connecting channel (13) with said first length of pipe (12) coming from the outlet (5) of the heat exchanger (3), being of the adjustable type,
**characterized in that** said connecting channel (13) is provided in a connector block (11) placed between said dispensing valve (10) and said dispensing unit (7).

2. A coffee machine according to of claim 1, **characterized in that** it comprises an infusion chamber (23) placed in said second length of pipe (25) directed towards the filter (9) of the dispensing unit (7), downstream of said dispensing valve (10), in which, when said dispensing valve (10) is in the opened state for a predetermined measured amount of coffee, the flow resulting from the admission of the flow with controlled flow rate of cold water coming from the pipe (14) converges in the flow of water at high temperature coming from said first length (12) of outlet pipe from the heat exchanger (3) which has occurred at said connecting channel (13), said chamber (23) effecting the mixing of the flows with the formation of a single flow directed to the filter (9) of the dispensing unit (7) at a predetermined regulated temperature for the preparation of the coffee.

3. A coffee machine according to claim 1, **characterized in that** said heat exchanger (3) comprises a path for the flow of the water within it, between the inlet and the outlet, formed by a pipe having a transverse dimension of the passage cross-section for the flow which is relatively small with respect to the length of the pipe between the inlet and the outlet.

4. A coffee machine according to claim 3, **characterized in that** the length of the flow path in said heat exchanger (3) is from 200 to 300 times the major transverse dimension of the pipe forming the passage cross-section for the flow.

5. A coffee machine according to claim 3, **characterized in that** said heat exchanger (3) comprises a tubular element (26) the internal cross-section of which has a maximum transverse dimension of between 6 and 10 mm and the length of which, between the inlet and the outlet for the flow, is between 1800 and 2000 mm.

6. A coffee machine according to claim 5, **characterized in that** said tubular element (26) has a circular internal cross-section and the length comprised between the inlet and the outlet is wound in a helix with turns alongside one another and with the formation of a substantially cylindrical body having an average diameter of around 40 mm and a height of around 140 mm.

7. A coffee machine according to claim 3, **characterized in that** said heat exchanger (3) comprises a box-like element (27) the internal cavity (28) of which comprises subdividing walls (29, 30, 31, 32) which define sealed chambers (A, B, C, D) separated from one another and connected in series with one another via connecting openings (33) spaced from one another, provided in said subdividing walls, said openings (33) forming a path in the form of a labyrinth between the inlet (4) and the outlet (5) of the exchanger (3).

## Patentansprüche

1. Kaffeemaschine, insbesondere für Espresso, umfassend wenigstens eine Abgabeeinheit (7) mit einem Filterhalter (8), einen Dampfgenerator (1), einen Wärmetauscher (3) in einer Wärmeaustauschbeziehung mit dem Dampfgenerator (1), wobei der Wärmetauscher (3) am Eingang mit einer Quelle druckbeaufschlagten kalten Wassers über eine Leitung (21), die wenigstens ein Flußmengen-Kalibriergerät (22) umfaßt, verbunden ist und am Ausgang mit einem ersten Leitungsabschnitt (12), der über ein Abgabeventil (10) zum Filter (9) der Abgabeeinheit (7) führt, und mit einem zweiten Leitungsabschnitt (25) stromabwärts des Ventils (10) verbunden ist, wobei der stromaufwärts des Abgabeventils (10) aus dem Wärmetauscher (3) kommende erste Leitungsabschnitt (12) einen Verbindungskanal (13) umfaßt, in welchen eine von einer Quelle (15) druckbeaufschlagten kalten Wassers kommende Leitung (14) mündet, die wenigstens eine Vorrichtung (17) zum Steuern der Flußmenge des durchfließenden Kaltwasserstroms umfaßt, wobei das Flußmengen-Kalibriergerät (22), das in der Leitung (21) angeordnet ist, die die Quelle (15) druckbeaufschlagten kalten Wassers mit dem Eingang (4) des Wärmetauschers (3) verbindet, vom nicht-einstellbaren Typ ist und wobei die Vorrichtung (17) zum Steuern der Flußmenge, die in der Leitung (14) angeordnet ist, welche von der Quelle (15) druckbeaufschlagten kalten Wassers kommt und zu dem Verbindungskanal (13) mit dem von dem Ausgang (5) des Wärmetauschers (3) kommenden ersten Leitungsabschnitt (12) führt, vom einstellbaren Typ ist,
**dadurch gekennzeichnet, daß** der Verbindungskanal (13) in einem zwischen dem Abgabeventil (10) und der Abgabeeinheit (7) angeordneten Verbindungsblock (11) ausgebildet ist.

2. Kaffeemaschine nach Anspruch 1, **dadurch gekennzeichnet, daß** sie eine Aufgußkammer (23), die in dem zum Filter (9) der Abgabeeinheit (7) führenden zweiten Leitungsabschnitt (25) stromabwärts des Abgabeventils (10) angeordnet ist, umfaßt, in welcher, wenn das Abgabeventil (10) für eine vorgegebene gemessene Menge von Kaffee in dem offenen Zustand ist, der Fluß, der aus dem Einlassen des von der Leitung (14) kommenden Kaltwasserstroms mit gesteuerter Flußmenge resultiert, mit dem aus dem ersten Abschnitt (12) der Auslaßleitung des Wärmetauschers (3) kommenden Fluß von heißem Wasser zusammenfließt, wobei das Zusammenfließen bereits an dem Verbindungskanal (13) stattfand, wobei die Kammer (23) das Mischen der Flüsse unter Ausbildung eines einzigen, zum Filter (9) der Abgabeeinheit (7) gerichteten Flusses mit einer vorgegebenen regulierten Temperatur für die Zubereitung des Kaffees durchführt.

3. Kaffeemaschine nach Anspruch 1, **dadurch gekennzeichnet, daß** der Wärmetauscher (3) einen Weg für das Fließen von Wasser in ihm zwischen dem Eingang und dem Ausgang umfaßt, der durch ein Rohr mit einer Querabmessung des Querschnittes des Durchganges für den Durchfluß gebildet ist, die bezüglich der Länge des Rohrs zwischen Eingang und Ausgang verhältnismäßig klein ist.

4. Kaffeemaschine nach Anspruch 3, **dadurch gekennzeichnet, daß** die Länge der Durchflußstrecke in dem Wärmetauscher (3) das 200- bis 300-fache der größten Querabmessung der Leitung beträgt, die den Querschnitt des Durchgangs für den Durchfluß bildet.

5. Kaffeemaschine nach Anspruch 3, **dadurch gekennzeichnet, daß** der Wärmetauscher (3) ein röhrenförmiges Element (26) umfaßt, dessen innerer Querschnitt eine maximale Querabmessung zwischen 6 und 10 mm aufweist und dessen Länge zwischen dem Eingang und dem Ausgang für den Fluß zwischen 1.800 und 2.000 mm liegt.

6. Kaffeemaschine nach Anspruch 5, **dadurch gekennzeichnet, daß** das röhrenförmige Element (26) einen kreisförmigen inneren Querschnitt aufweist und die zwischen dem Eingang und dem Ausgang umfaßte Länge zu einer Wendel mit nebeneinander angeordneten Windungen gebogen ist, wobei ein im wesentlichen zylindrischer Körper mit einem durchschnittlichen Durchmesser von etwa 40 mm und einer Höhe von etwa 140 mm gebildet ist.

7. Kaffeemaschine nach Anspruch 3, **dadurch gekennzeichnet, daß** der Wärmetauscher (3) ein behälterförmiges Element (27) umfaßt, dessen innerer Raum (28) Trennwände (29, 30, 31, 32) umfaßt, die abgedichtete Kammern (A, B, C, D) definieren, die voneinander getrennt sind und miteinander seriell über Verbindungsöffnungen (33) verbunden sind, die voneinander beabstandet und in den Trennwänden ausgebildet sind, wobei die Öffnungen (33) einen Weg in der Form eines Labyrinths zwischen dem Eingang (4) und dem Ausgang (5) des Tauschers (3) bilden.

## Revendications

1. Machine à café, en particulier pour café espresso, comprenant au moins une unité de distribution (7) avec un support de filtre (8), un générateur de vapeur (1), un échangeur de chaleur (3) en relation d'échange thermique avec ledit générateur de vapeur (1), ledit échangeur de chaleur (3) étant connecté, côté entrée, via une conduite (21) qui comprend au moins un appareil à calibrer le débit (22), à une source d'eau froide pressurisée, et, côté sortie, à une première section de conduite (12) menant vers le filtre (9) de ladite unité de distribution (7) via une vanne de distribution (10) ainsi qu'à une seconde section de conduite (25) en aval de ladite vanne (10), ladite première section de conduite (12) qui fait saillie de l'échangeur de chaleur (3), en amont de ladite vanne de distribution (10), comprenant un canal de liaison (13) dans lequel débouche une conduite (14) qui s'étend à partir d'une source (15) d'eau froide pressurisée et qui comprend au moins un dispositif (17) de commande du débit du flux d'eau froide s'écoulant à travers, ledit dispositif à calibrer le débit (22) qui est inséré dans ladite conduite (21) qui relie ladite source (15) d'eau froide pressurisée à ladite entrée (4) de l'échangeur de chaleur (3) étant du type fixe et ledit dispositif (17) de commande du débit qui est inséré dans ladite conduite (14) qui s'étend à partir de ladite source (15) d'eau froide pressurisée et mène vers ledit canal de liaison (13) avec ladite première section de conduite (12) faisant saillie de la sortie (5) de l'échangeur de chaleur (3) étant du type ajustable,
**caractérisée par le fait que** ledit canal de liaison (13) est réalisé dans un bloc connecteur (11) situé entre ladite vanne de distribution (10) et ladite unité de distribution (7).

2. Machine à café selon la revendication 1, **caractérisée par le fait qu'**elle comprend une chambre d'infusion (23) qui est disposée dans ladite seconde section de conduite (25) menant vers le filtre (9) de ladite unité de distribution (7), en aval de ladite vanne de distribution (10), et dans laquelle, lorsque la vanne de distribution (10) est en état ouvert pour une quantité de café mesurée prédéterminée, le flux résultant de l'admission du flux d'eau froide avec un débit contrôlé en provenance de la conduite (14) conflue avec le flux d'eau chaude en provenance de ladite première section (12) de la conduite de sortie de l'échangeur de chaleur (3), le confluent ayant eu lieu déjà sur ledit canal de liaison (13), ladite chambre (23) effectuant le mélange des flux en formant un seul flux dirigé vers le filtre (9) de ladite unité de distribution (7) à une température régulée prédéterminée pour la préparation du café.

3. Machine à café selon la revendication 1, **caractérisée par le fait que** ledit échangeur de chaleur (3) comprend un trajet pour l'écoulement d'eau dans celui-ci entre l'entrée et la sortie, qui est formé par un tube ayant une dimension transversale de la section transversale de passage pour le flux, qui est relativement petite par rapport à la longueur du tube entre l'entrée et la sortie.

4. Machine à café selon la revendication 3, **caractérisée par le fait que** la longueur du trajet d'écoulement dans ledit échangeur de chaleur (3) fait entre 200 fois et 300 fois la dimension transversale la plus grande de la conduite qui forme la section transversale de passage pour le flux.

5. Machine à café selon la revendication 3, **caractérisée par le fait que** ledit échangeur de chaleur (3) comprend un élément tubulaire (26) dont la section transversale intérieure présente une dimension transversale maximale comprise entre 6 et 10 mm et dont la longueur entre l'entrée et la sortie pour le flux est comprise entre 1.800 et 2.000 mm.

6. Machine à café selon la revendication 5, **caractérisée par le fait que** ledit élément tubulaire (26) présente une section transversale intérieure circulaire et que la longueur comprise entre ladite entrée et ladite sortie est recourbée en hélice ayant des spires disposées les unes à côté des autres, un corps pour l'essentiel cylindrique présentant un diamètre moyen de 40 mm à peu près et une hauteur de 140 mm à peu près étant formé.

7. Machine à café selon la revendication 3, **caractérisée par le fait que** ledit échangeur de chaleur (3) comprend un élément en forme de récipient (27) dont le volume intérieur (28) comprend des parois de séparation (29, 30, 31, 32) qui définissent des chambres étanchées (A, B, C, D) lesquelles sont séparées les unes des autres et sont reliées les unes aux autres en série via des ouvertures de communication (33) qui sont espacées les unes des autres et ménagées dans lesdites parois de séparation, lesdites ouvertures (33) formant un trajet sous forme d'un labyrinthe entre ladite entrée (4) et ladite sortie (5) de l'échangeur (3).
